# EUROPÄISCHE PATENTSCHRIFT

(11) **EP 0 415 223 B1**
(45) Veröffentlichungstag und Bekanntmachung des Hinweises auf die Patenterteilung: **15.11.1995**
(21) Anmeldenummer: 90115913.7
(22) Anmeldetag: 20.08.1990
(51) Int. Cl.: B29C 51/18, B29C 51/22

(54) **Vorrichtung zur schrittweisen Herstellung eines Endproduktes unter Verwendung thermoplastischer Materialien**
Apparatus for the step by step production of an endproduct using thermoplastic materials
Dispositif pour la production par pas à pas d'un produit final en utilisant des matériaux thermoplastiques

(30) Priorität: 01.09.1989 DE 3929135
(43) Veröffentlichungstag der Anmeldung: 06.03.1991
(73) Patentinhaber: PAUL KIEFEL GMBH, D-83395 Freilassing (DE)
(72) Erfinder: Berger, Benno, D-8229 Ainring 1 (DE); Landsteiner, Rudolf, D-8228 Freilassing (DE); Posch, Georg, D-8230 Bad Reichenhall (DE); Schaupp, Rudolf, D-8240 Berchtesgaden (DE)
(74) Vertreter: Zmyj, Erwin, Dipl.-Ing., Dipl.-Wirtsch.-Ing.

(56) Entgegenhaltungen:
- EP-A- 0 234 371
- GB-A- 755 475
- GB-A- 2 032 339
- US-A- 4 764 241

## Beschreibung

Die Erfindung bezieht sich auf eine Vorrichtung zur schrittweisen Herstellung eines Endproduktes ausgehend von thermoplastischen Materialien oder einem Trägerkörper und eines aufzukaschierenden thermoplastischen Materials in ein und demselben Unterwerkzeug mit Hilfe mehrerer Oberwerkzeuge, die nacheinander zum Einsatz kommen, wobei das Werkstück stets im gleichen Unterwerkzeug verbleibt.

Beim Formen oder Kaschieren von Teilen, insbesondere von Innenverkleidungsteilen für Automobile, sind zu einem Unterwerkzeug teilweise mehrere verschiedene Oberwerkzeuge erforderlich. Dies können Formhilfen, Entformhilfen, Schnittwerkzeuge usw. sein, da zunehmend mehrere Fertigungsoperationen in einem Arbeitsprozeß integriert werden. Diese Mehrzahl von Werkzeugen kann dann meist nicht mehr in einem Hubtisch untergebracht werden, teils aus räumlichen, teils auch aus verfahrenstechnischen Gründen.

In bekannter Weise werden dazu entweder zwei Hubtische nebeneinander angeordnet und querverfahren (DE-AS 25 17 534) oder zwei Tische ineinander angeordnet, welche nacheinander fahren sowie beide Arten auch kombiniert. Diese Querverfahrbarkeit sowie die Integrierung zweier Tische ineinander ist relativ aufwendig und platzintensiv. Trotz dieses hohen Aufwandes besteht der Nachteil, daß große Massen bewegt werden müssen und außerdem müssen Einschränkungen in der Universalität der Werkzeugausbildung in Kauf genommen werden.

Bei einer bekannten Vorrichtung der eingangs erläuterten Art (US-A-4, 764, 241) ist das Unterwerkzeug, in welchem das Werkstück während der verschiedenen Arbeitsschritte verbleibt, auf einem Drehtisch angeordnet, und wird mit dessen Hilfe zu den einzelnen Bearbeitungsstationen befördert, in welchen das für den jeweiligen Arbeitsschritt notwendige Werkzeug vorgesehen ist. Sofern nur ein einziges Werkstück hergestellt wird, weist jede Arbeitsstation auch nur ein einziges Oberwerkzeug auf. In der genannten US-A-4, 764, 241 sind zur besseren Ausnutzung des Drehtisches vier verschiedene Unterwerkzeuge zur Herstellung unterschiedlicher Werkstücke, beispielsweise zur Herstellung des Sitzkissens eines Vordersitzes, der Rückenlehne eines Vordersitzes, des Sitzkissens der hinteren Sitzbank und der Rückenlehne der hinteren Sitzbank eines Kraftfahrzeuges vorgesehen. Da diese Werkstücke unterschiedliche Formgebungen aufweisen, muß beispielsweise in der Formstation zur Verformung der Außenhülle, beispielsweise des vorderen Sitzkissens ein anderes Oberwerkzeug zur Verfügung stehen, als wenn beispielsweise die Rückenlehne des Vordersitzes geformt werden soll. Ebenso müssen in der Station, in welcher die Schaumkerne in die vorgeformte Außenhülle eingebracht und dort mit dieser verbunden werden, unterschiedliche Werkzeuge und zwar für jedes Werkstück ein anderes Oberwerkzeug vorgesehen sein, um diesen Vorgang des Zusammenfügens von Sitzkissen und Außenhülle zu bewerkstelligen. Um nun an den einzelnen Stationen, beispielsweise der Formstation für die Außenhülle und die Station für das Einbringen der Schaumkerne in die Außenhülle diese Arbeiten möglichst rationell durchführen zu können, sind sowohl an der Formstation für die Verformung der Außenhülle für den jeweiligen Sitzteil als auch bei der Station, in welcher der Schaumkern mit der Außenhülle zusammengefügt wird, jeweils ein Drehkreuz mit den entsprechenden verschiedenen Oberwerkzeugen vorgesehen. Dieses Drehkreuz mit an seinen Armen angeordneten unterschiedlichen Werkzeugen ist also vorgesehen, um für jedes der unterschiedlichen Unterwerkzeuge das jeweils dazu passende Oberwerkzeug zur Verfügung stellen zu können. Da auf dem Drehtisch vier unterschiedliche Unterwerkzeuge vorgesehen sind, müssen zwangsläufig bei den beiden Drehkreuzen vier verschiedene Oberwerkzeuge vorgesehen sein, damit beispielsweise dem Unterwerkzeug für das Sitzkissen des Vordersitzes auch ein entsprechendes Oberwerkzeug zugeordnet werden kann, welches für die Herstellung des Vordersitzes notwendig ist. Jedes Oberwerkzeug kommt also nur für einen bestimmten Arbeitsvorgang mit jeweils dem gleichen Unterwerkzeug zum Einsatz, so daß jedem Unterwerkzeug einer bestimmten Formgebung nur ein ganz bestimmtes Oberwerkzeug zugeordnet ist.

Aufgabe der Erfindung ist es, eine Vorrichtung zu schaffen, welche eine Durchführung von Arbeitsvorgängen mit mehreren verschiedenen Oberwerkzeugen ermöglicht, ohne daß sich diese behindern, wobei eine Vereinfachung des baulichen Aufwandes erreicht werden soll.

Diese Aufgabe wird ausgehend von einer Vorrichtung gemäß dem ersten Teil des Anspruchs 1 erfindungsgemäß dadurch gelöst, daß das Unterwerkzeug auf einem Hubtisch angeordnet ist, daß ein oberer Hubtisch vorgesehen ist, an dem ein drehbares und antreibbares Drehkreuz gelagert ist, und daß an den Enden der Arme des Drehkreuzes verschiedene Oberwerkzeuge angeordnet sind, die entsprechend den aufeinanderfolgenden Arbeitsschritten nacheinander durch Verdrehen des Drehkreuzes in Arbeitsstellung mit dem im gleichen Unterwerkzeug verbleibenden Werkstück bringbar sind.

Aufgrund dieser Ausgestaltung können mehrere verschiedene Werkzeuge einem einzigen Obertisch zugeordnet werden, ohne daß sich diese Werkzeuge in irgendeiner Form gegenseitig stören. Die Ausbildung eines Drehkreuzes ist dabei aus konstruktiver Sicht äußerst einfach, so daß dieser Aufwand wesentlich geringer ist als die bisher bekannten Maßnahmen, die eingangs erläutert wurden.

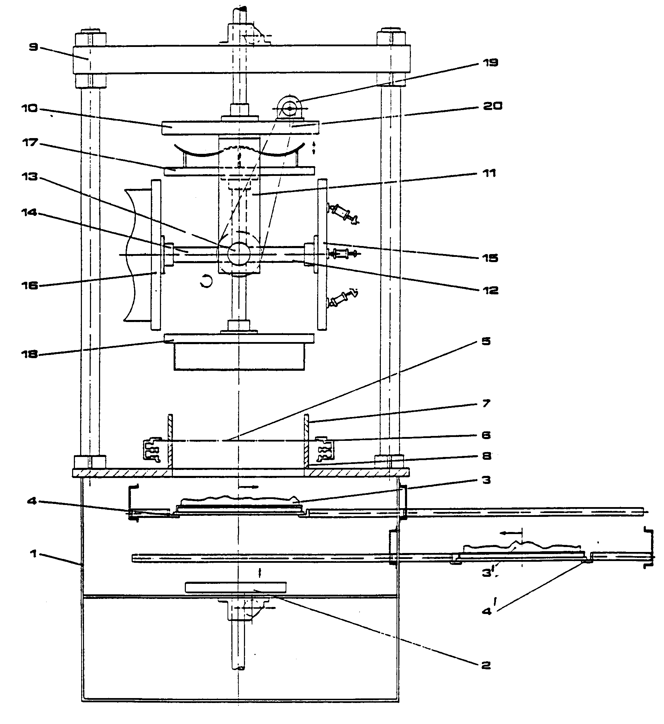

Die Erfindung wird nachstehend anhand eines in der Zeichnung dargestellten Ausführungsbeispiels näher erläutert.

Die einzige Figur zeigt eine Ansicht einer Verformungsvorrichtung mit mehreren Werkzeugen an einem Drehkreuz.

In einem Maschinengestell 1 ist im unteren Bereich ein unterer Hubtisch 2 vorgesehen, mit dessen Hilfe Unterwerkzeuge 3, 3' in die Arbeitsstellung gebracht werden können, die sich auf horizontal verfahrbaren Rahmen 4 bzw. 4' befinden. Die horizontale Verfahrbarkeit ist vorgesehen, um die Werkzeuge außerhalb des Arbeitsbereiches be- und entladen zu können oder einen Werkzeugwechsel in einfacher Weise durchzuführen.

Eine erwärmte und zu verformende Folie 5 wird in den Arbeitsbereich oberhalb des Unterwerkzeuges 3 mittels einer Transportkette 6 eingefahren und dort durch einen Oberrahmen 7 und einen Unterrahmen 8 geklemmt. In dieser Position kann nun die Folie 5 durch ein Oberwerkzeug im Zusammenspiel mit dem Unterwerkzeug verformt werden oder auf ein auf dem Unterwerkzeug gehaltenes Trägerteil aufkaschiert werden. Für den Verformungsvorgang, das Abtrennen des verformten Teiles aus dem Folienverband und das Entformen sind häufig mehrere Oberwerkzeuge notwendig, die nacheinander in Einsatz gebracht werden müssen.

Um in einfacher Weise diese Oberwerkzeuge nacheinander in Einsatz bringen zu können, ist an einem oberen Querträger 9 ein oberer Hubtisch (im folgenden Obertisch 10) vertikal verschiebbar angeordnet, der an einem Traggestell 11 ein Drehkreuz 12 trägt, das mittels einer Welle 13 drehbar gelagert ist. An den Enden der Arme 14 des Drehkreuzes 12 sind verschiedene Oberwerkzeuge angebracht, die zum Einsatz kommen können, wenn sie sich in der untersten Stellung befinden. Im Ausführungsbeispiel sind ein Vordehnstempel 15, eine Formschale 16, eine Entformschale 17 und ein Schnittwerkzeug 18 angeordnet, von denen sich das Schnittwerkzeug 18 in derjenigen Stellung befindet, in der es zum Arbeitseinsatz gelangen kann.

Der Drehantrieb des Drehkreuzes 12 erfolgt durch einen Motor 19 und Übertragungsglieder 20, beispielsweise Ketten oder Keilriemen.

An einem Wellenende kann ein Rotationsverteiler vorgesehen sein, über den ein Anschluß an Wasser, Luft, Vakuum möglich ist. Ein Schleifringsystem kann zur Zuführung von elektrischem Strom dienen.

## Patentansprüche

1. Vorrichtung zur schrittweisen Herstellung eines Endproduktes ausgehend von thermoplastischen Materialien oder einem Trägerkörper und eines aufzukaschierenden thermoplastischen Materials in ein und demselben Unterwerkzeug (3) mit Hilfe mehrerer Oberwerkzeuge (15, 16, 17, 18), die nacheinander zum Einsatz kommen, wobei das Werkstück stets im gleichen Unterwerkzeug (3) verbleibt, **dadurch gekennzeichnet,** daß das Unterwerkzeug (3) auf einem Hubtisch (2) angeordnet ist, daß ein oberer Hubtisch (10) vorgesehen ist, an dem ein drehbares und antreibbares Drehkreuz (12) gelagert ist, und daß an den Enden der Arme (14) des Drehkreuzes (12) verschiedene Oberwerkzeuge (15, 16, 17, 18) angeordnet sind, die entsprechend den aufeinanderfolgenden Arbeitsschritten nacheinander durch Verdrehen des Drehkreuzes (12) in Arbeitsstellung mit dem im gleichen Unterwerkzeug (3) verbleibenden Werkstück bringbar sind.

2. Vorrichtung nach Anspruch 1, **dadurch gekennzeichnet,** daß der untere Hubtisch (2) horizontal verschiebbare Rahmen (4, 4') mit zwei gleichen Unterwerkzeugen (3) aufweist.

## Claims

1. Apparatus for the step by step production of an end product using thermoplastic materials or a carrier body to be coated with a thermoplastic material in one and the same bottom moulding tool (3) with the aid of a plurality of top moulding tools (15, 16, 17, 18) used one after the other, the workpiece always remaining in the same bottom moulding tool (3), characterised in that the bottom moulding tool (3) is arranged on a lifting table (2), that an upper lifting table (10) on which a rotatable and drivable spider (12) is mounted is provided and that various top moulding tools (15, 16, 17, 18) are arranged at the ends of the arms (14) of the spider (12) and can be brought into the working position one after the other in accordance with the successive steps by rotating the spider (12), with the workpiece remaining in the same bottom moulding tool (3).

2. Apparatus according to claim 1, characterised in that the lower lifting table (2) has horizontally displaceable frames (4, 4') with two identical bottom moulding tools (3).

## Revendications

1. Dispositif destiné à la fabrication pas à pas d'un produit fini en partant de matériaux thermoplastiques ou d'un corps de support sur lequel un matériau thermoplastique doit être plaqué, et ce dans un seul et même outil inférieur (3) à l'aide de plusieurs outils supérieurs (15, 16, 17, 18) qui sont mis en oeuvre l'un après l'autre, la pièce à traiter restant en permanence dans le même outil inférieur (3), caractérisé en ce que l'outil inférieur (3) est disposé sur une table élévatrice (2), en ce qu'il est prévu une table élévatrice supérieure (10) sur laquelle est montée un tourniquet (12) pouvant être tourné et entraîné, et en ce que différents outils supérieurs (15, 16, 17, 18) sont disposés sur les extrémités des bras (14) du tourniquet (12) qui, en fonction des phases de travail successives, peuvent être placés l'un après l'autre en position de travail par rapport à la pièce à traiter maintenue dans le même outil inférieur (3), par une rotation du tourniquet (12).

2. Dispositif selon la revendication 1, caractérisé en ce que la table élévatrice inférieure (2) comporte des cadres (4, 4') susceptibles de se déplacer horizontalement avec deux outils inférieurs (3) identiques.
